**Europäisches Patentamt**

**European Patent Office**

**Office européen des brevets**

(19)

(11) Veröffentlichungsnummer: **0 135 692**
**B1**

(12) **EUROPÄISCHE PATENTSCHRIFT**

(45) Veröffentlichungstag der Patentschrift:
**25.01.89**

(21) Anmeldenummer: **84108404.9**

(22) Anmeldetag: **17.07.84**

(51) Int. Cl.⁴: **C 07 F 7/12,** C 07 F 7/20

(54) **Verfahren zur Herstellung von 2-Chlorethyldichlorsilanen.**

(30) Priorität: **31.08.83 DE 3331372**

(43) Veröffentlichungstag der Anmeldung:
**03.04.85 Patentblatt 85/14**

(45) Bekanntmachung des Hinweises auf die Patenterteilung:
**25.01.89 Patentblatt 89/4**

(84) Benannte Vertragsstaaten:
**DE FR GB IT**

(56) Entgegenhaltungen:
**DE-B-2 461 480**
**FR-A-2 254 577**

**G.A. OLAH: "Friedel-crafts and related reactions",
Band I, General Aspects, 1963, pages 265-291,
Interscience Publishers, New York, US;**

(73) Patentinhaber: **HÜLS TROISDORF
AKTIENGESELLSCHAFT, Postfach 11 65, D-5210
Troisdorf (DE)**

(72) Erfinder: **Seiler, Claus- Dietrich, Dr., In der Klus
10, D-7888 Rheinfelden (DE)**
Erfinder: **Vahlensieck, Hans- Joachim, Dr., Im
Habiken 2, D-7867 Wehr (DE)**

EP 0 135 692 B1

LIBER, STOCKHOLM 1989

**Beschreibung**

Gegenstand der vorliegenden Erfindung ist ein Verfahren zur Herstellung von 2-Chlorethyldichlorsilanen durch Umsetzung von Vinyldichlorsilanen mit Chlorwasserstoff in Gegenwart von wasserfreien Metallchloriden.

Es ist aus der DE-AS 2 239 412 bekannt, Vinylmethyldichlorsilan mit Chlorwasserstoff in Gegenwart von wasserfreiem Aluminiumchlorid zu 2-Chlorethylmethyldichlorsilan umzusetzen. Dabei muß die Reaktionstemperatur jedoch unter 0°C liegen und die destillative Abtrennung des gewünschten Chlorethylmethyldichlorsilans von den Nebenprodukten und dem AlCl3 kann nur unter starker Kühlung der Produktvorlagen durchgeführt werden, weil sonst bei Temperaturen ab 10 bis 20°C das Chlorethyldichlorsilan sich bereits wieder unter Bildung der Ausgangsprodukte oder von Methyltrichlorsilan und Ethylen zersetzt (FR 2 254 577-A).

Zur Behebung dieser Nachteile wird in der DE-OS 2 458 962 ein Verfahren beschrieben, demzufolge die Destillation in Gegenwart von Alkalichloriden durchgeführt wird. Bei Anwendung dieser Maßnahmen kann man zwar die Destillation bis zu Sumpftemperaturen von 90°C bei Drücken zwischen 15 und 30 mbar durchführen; man erhält aber trotzdem nur Ausbeuten, die maximal bei 71 % liegen und damit für technische Zwecke ungenügend sind.

Es ist weiterhin aus der DE 2 461 480-B bekannt, die Umsetzung von Vinyltrichlorsilan mit Chlorwasserstoff in Gegenwart von FeCl3 unter Bildung von ß-Chlorethyltrichlorsilanen durchzuführen. Dieses Trichlorsilan ist jedoch im Gegensatz zu den Dichlorsilanen bei Temperaturen oberhalb 20°C beständig, so daß die dort beschriebene Verfahrensweise keine Hinweise auf das Verhalten von Dichlorsilanen bei Temperaturen oberhalb 20°C unter den dort genannten Bedingungen gibt.

Es bestand deshalb die Aufgabe, die Umsetzung von Vinyldichlorsilanen mit Chlorwasserstoff unter Bildung von Chlorethyldichlorsilanen so zu führen, daß man bei Raumtemperatur oder leicht erhöhten Temperaturen arbeiten kann daß bei der Umsetzung und anschließenden Destillation die Bildung von Nebenprodukten wie Methyl- oder Ethyltrichlorsilan oder die Rückbildung von Vinyldichlorsilanen weitgehend vermieden wird und Ausbeuten von mehr als 90 % erhalten werden.

In Erfüllung dieser Aufgabe wurde nun ein Verfahren zur Herstellung von 2-Chlorethyldichlorsilanen durch Umsetzung von Vinyldichlorsilanen mit Chlorwasserstoff in Gegenwart von wasserfreien Metallchloriden gefunden, das dadurch gekennzeichnet ist, daß als wasserfreie Metallchloride entweder FeCl3 oder TaCl5 eingesetzt wird, wobei FeCl3 in Mengen zwischen 1 und 15 Gew.-%, bezogen auf Vinyldichlorsilan, eingesetzt wird und dabei die Umsetzung im Temperaturbereich zwischen 30 und 60°C und beim Einsatz von TaCl5 die Umsetzung im Bereich zwischen 40 und 90°C durchgeführt wird.

Bei Anwendung dieser Verfahrensweise wird die Bildung von Neben- oder Zersetzungsprodukten weitgehend zurückgedrängt und die Umsetzung zu den gewünschten 2-Chlorethylsilanen verläuft nahezu quantitativ. Dies ist um so überraschender als beim Einsatz von Aluminiumchlorid als Katalysatoren gemäß dem Verfahren der DE-AS 2 239 417 beim Arbeiten in dem beanspruchten Temperaturbereich die Bildung von Zersetzungsprodukten während der Synthese bereits Beträge zwischen 10 und 50 %, bezogen auf eingesetztes Vinylmethyldichlorsilan, erreicht.

Das Eisenchlorid kann in Mengen zwischen 1 und 15 Gew.-% eingesetzt werden. Der Einsatz größerer Mengen fördert die Bildung von Zersetzungsprodukten, während Mengen unter Gew.-% einen verminderten Umsatz an Vinyldichlorsilanen zur Folge hat. Der bevorzugte Mengenbereich des FeCl3 liegt zwischen 1 und 10 Gew.-%, bezogen auf eingesetztes Vinyldichlorsilan. Bei diesen Mengen liegt der bevorzugte Temperaturbereich zwischen 10 und 50°C.

Auch beim Einsatz von TaCl5 führt die Verwendung von größeren Mengen zu einer zunehmenden Bildung von Zersetzungsprodukten. Die Menge an TaCl5 soll deshalb nach Möglichkeit 10 Gew.-%, bezogen auf eingesetztes Vinyldichlorsilan, nicht überschreiten. Der bevorzugte Mengenbereich liegt zwischen 1 und 5 Gew.-%, bezogen auf eingesetztes Vinyldichlorsilan. In diesem Bereich wird vorzugsweise bei Temperaturen zwischen 65 und 80°C die Umsetzung durchgeführt.

Bei beiden Metallchloriden verstärkt sich leicht bei höheren Temperaturen in Verbindung mit der Anwendung höherer Mengen an Metallchloriden die Bildung von Zersetzungsprodukten; dagegen wird bei niedrigeren Temperaturen die Bildung von Zersetzungsprodukten leicht auf Kosten eines unvollständiger werdenden Umsatzes des Einsatzproduktes abgeschwächt.

Die erfindungsgemäße Umsetzung der Vinyldichlorsilane mit Chlorwasserstoff läuft bei Normaldruck ab. Anwendung geringer Über- oder Unterdrücke ist prinzipiell möglich; sie hat jedoch keinen wesentlichen Einfluß auf das Reaktionsgeschehen.

Die erfindungsgemäße Verfahrensweise kann sowohl im Chargenverfahren als auch kontinuierlich durchgeführt werden. Die praktische Durchführung kann nach an sich bekannten Methoden ausgeführt werden. Das Metallchlorid braucht nicht in Lösung, oder auf einem Träger, eingesetzt zu werden, sondern kann als Suspension im Reaktionsmedium vorliegen. Dabei muß selbstverständlich für eine gute und gleichmäßige Verteilung innerhalb des Reaktionsmediums gesorgt werden.

Die als Ausgangsprodukte einsetzbaren Vinyldichlorsilane haben am Si-Atom zusätzlich entweder eine Methyl- oder Ethylgruppe oder eine Vinylgruppe. Als Endprodukte bilden sich dann entweder 2-Chlorethylmethyl- oder 2-Chlorethyl-ethyldichlorsilane oder das Bis-(2-chlorethyl)-dichlorsilan.

Die Abtrennung der gewünschten Endprodukte aus dem Reaktionsgemisch kann ohne Anwendung zusätzlicher Maßnahmen durch Destillation durchgeführt werden. Vorzugsweise wird im Vakuum bei Sumpftemperaturen bis zu etwa 80°C geargearbeitet. Dabei braucht das Metallchlorid nicht abgetrennt zu werden. Überraschenderweise erfolgt während des gesamten Destillationsablaufs trotz des dabei nicht zu ver meidenden stetigen Anstiegs des Metallchlorid-Anteils im Destillationssumpf kein Verfall des Reaktionsproduktes. Wenn das Abdestillieren des gewünschten Chlorethyldichlorsilans nicht bis zur Trockne des Sumpfprodukts erfolgt, kann das im Sumpf verbleibende Metallchlorid direkt einem neuen Ansatz ohne weitere Reinigungsoperation zugeführt werden.

Die nach dem beanspruchten Verfahren erhaltenen 2-Chlorethyldichlorsilane, insbesondere das 2-Chlorethylmethyldichlorsilan, sind technisch wichtige Zwischenprodukte zur Herstellung von Verbindungen, die im Agrarbereich, als Haftvermittler oder zur Modifizierung von Silikonen, eingesetzt werden.

## Vergleichsbeispiel 1

Ein gläsernes, zylindrisches Doppelmantel-Gefäß ($\varnothing$ 10 cm) von 3 Liter Inhalt, das mit einem Rührer, einem Gaseinleitungsrohr mit Fritte, einem Thermometer und einem Rückflußkühler ausgestattet ist, wird mit 2115 g (15 Mol) Vinylmethyldichlorsilan und 21 g wasserfreiem $FeCl_3$ beschickt. Über einen Thermostaten wird im Inneren des Reaktionsgefäßes eine Temperatur von 20°C eingestellt, anschließend wird mit der Einleitung des Chlorwasserstoffes über die am Boden des zylindrischen Gefäßes angebrachte Fritte begonnen. Über einen Zeitraum von 6 Stunden werden insgesamt 584 g (16 Mol) Chlorwasserstoff eingeleitet. Nach dieser Zeit wird die Umsetzung abgebrochen und eine Probe der Reaktionsflüssigkeit gaschromatographisch untersucht. Lediglich 16 % des eingesetzten Vinylmethyldichlorsilans waren zu 2-Chlorethylmethyldichlorsilan umgesetzt worden.

## Vergleichsbeispiel 2

In der Apparatur des Beispiels 1 werden die gleichen Mengen an Vinylmethyldichlorsilan und Chlorwasserstoff bei gleicher Temperatur wie in Beispiel 1, jedoch in Gegenwart von 317 g wasserfreiem $FeCl_3$, umgesetzt. Ca. 50 % des eingesetzten Vinylmethyldichlorsilans wurden in 2-Chlorethylmethyldichlorsilan umgewandelt.

## Vergleichsbeispiel 3

In der Apparatur des Beispiels 1 werden die gleichen Mengen an Vinylmethyldichlorsilan und Chlorwasserstoff in Gegenwart gleicher Mengen an $FeCl_3$ wie in Beispiel 1, aber bei Temperaturen von 70°C, zur Umsetzung gebracht. Ca. 65 % des eingesetzten Vinylmethyldichlorsilans wurden zu 2-Chlorethylmethyldichlorsilan umgesetzt.

## Vergleichsbeispiel 4

In der Apparatur des Beispiels 1 werden die gleichen Mengen an Vinylmethyldichlorsilan und Chlorwasserstoff wie in Beispiel 1, jedoch in Gegenwart von 317 g wasserfreiem $FeCl_3$ und bei Temperaturen von 70°C reagieren gelassen. Ca. 55 % des eingesetzten Vinylmethyldichlorsilans wurden in 2-Chlorethylmethyldichlorsilan überführt.

## Beispiele 5 bis 12 (erfindungsgemäß)

Entsprechend dem Beispiel 1 werden die dort angegebenen Mengen an Vinylmethyldichlorsilan mit Chlorwasserstoff umgesetzt. Es werden die Reaktionstemperaturen und die Katalysatorkonzentrationen verändert. Die Ergebnisse werden in der Tabelle 1 aufgeführt.

Unter der Rubrik "Endproduktanalyse" werden die gaschromatographisch ermittelten Flächenprozente der die Reaktionslösung zusammensetzenden Komponenten vor und nach Abtrennung des Katalysators aufgeführt. Die Abtrennung des Katalysators erfolgte durch Destillation des Rohprodukts.

Unter der Rubrik "Ausbeute" sind die entsprechenden Ergebnisse der fraktionierten destillativen Aufarbeitung der Syntheserohprodukte aufgeführt. Die Ausbeute ist in Gew.-%, bezogen auf eingesetztes Vinylmethyldichlorsilan, angegeben.

**Beispiel 13**

In der Apparatur des Beispiels 1 werden 2115 g Vinylmethyldichlorsilan und 105 g FeCl$_3$ eingesetzt. Bei einer Temperatur der Reaktionslösung von ca. 50°C werden in ca. 6 Stunden 584 g Chlorwasserstoff eingeleitet. Anschließend wird die gesamte Reaktionslösung in eine Destillationsapparatur überführt.

Bei einer Sumpftemperatur von anfangs 28°C und einem Druck von 30 mbar wird die Destillation des Syntheserohprodukts eingeleitet. Unter allmählicher Steigerung der Sumpftepperatur auf 64°C und Absenken des Druckes im Inneren der Destillationsapparatur auf 2 mbar wird soviel Destillat abgenommen, bis ein Flüssigkeits-Restvolumen von ca. 200 ml verbleibt.

Dieser, das Eisenchlorid enthaltende Rückstand des Rohdestillats, wird in die Syntheseapparatur des Beispiels 1 zurückgeführt, in die bereits 2115 g Vinylmethyldichlorsilan vorgelegt waren. Bei 50°C wird die Zugabe von 584 g Chlorwasserstoff innerhalb ca. 6 Stunden vorgenommen. Wie beschrieben, wird die destillative Aufarbeitung des Syntheserohproduktes durchgeführt und anschließend noch zweimal die Prozedur von Synthese und Syntheserohproduktdestillation in gleicher Weise wiederholt. Beim letzten Ansatz wird die Destillation erst abgebrochen, wenn sich Rand des Destillationssumpfes das FeCl$_3$ trocken auszuscheiden beginnt.

Die Rohdestillate der 4 Ansätze werden vereint und einer fraktionierten Destillation unterworfen. Es werden 10128 g 2-Chlorethylmethyldichlorsilan erhalten. Dies entspricht einer Ausbeute von 95,1 %, bezogen auf eingesetzte Vinylmethyldichlorsilan.

**Beispiel 14**

In der Apparatur des Beispiels 1 wurden 2115 g Vinylmethyldichlorsilan und 42 g TaCl$_5$ vorgelegt. Bei einer Temperatur der Reaktionslösung von 70°C wurden 584 g Chlorwasserstoff innerhalb von 6 Stunden eingeleitet. Die gaschromatographische Untersuchung der erhaltenen Reaktionslösung ergab folgende Zusammensetzung (Flächenprozente):

| | |
|---|---|
| 97 % | 2-Chlorethylmethyldichlorsilan |
| 0,1 % | Vinylmethyldichlorsilan |
| 1,5 % | Methyltrichlorsilan |
| 1,4 % | nicht identifizierte Bestandteile. |

Dieses Rohprodukt wurde in eine Destillationsapparatur überführt und analog Beispiel 13 abdestilliert, bis der TaCl$_5$-Katalysator trocken im Kolben zurückbleibt. Das gesammmelte Destillat wurde gaschromatographisch untersucht; es hatte folgende Zusammensetzung:

| | |
|---|---|
| 97,3 % | 2-Chlorethylmethyldichlorsilan |
| 0,1 % | Vinylmethyldichlorsilan |
| 1,6 % | Methyltrichlorsilan |
| 1,0 % | nicht identifizierte Bestandteile. |

Die fraktionierte destillative Aufarbeitung des vom Katalysator abgetrennten Destillats ergab 2592 g 2-Chlorethylmethyldichlorsilan in einer gaschromatographischen Reinheit von 99,4 %. Dies entspricht einer Ausbeute von 96,7 %, bezogen auf eingesetztes Vinylmethyldichlorsilan.

**EP 0 135 692 B1**

**Tabelle 1**

| Beispiel | 5 | 6 | 7 | 8 | 9 | 10 | 11 | 12 |
|---|---|---|---|---|---|---|---|---|
| eingesetztes FeCl$_3$ (Gew.-%) | 1 | 2 | 2 | 5 | 5 | 10 | 10 | 15 |
| Reaktionstemperatur(°C) | 48 | 40 | 50 | 40 | 50 | 30 | 40 | 50 |
| Reaktionszeit (Stunden) | 6 | 6 | 6 | 6 | 6 | 6 | 6 | 6 |
| Endproduktanalyse | | | | | | | | |
| a) vor Abtrennung des Katalysators | | | | | | | | |
| Cl-CH$_2$-CH$_2$-(CH$_3$-) SiCl$_2$(GC-Prozente) | 96,3 | 90.5 | 95.9 | 93.3 | 96.0 | 94.1 | 93.3 | 93.4 |
| CH$_3$-SiCl$_3$(GC-Prozente) | 2.0 | 1.5 | 2.1 | 1.8 | 2.3 | 1.0 | 1.8 | 3.5 |
| C$_2$=CH-(CH$_3$-) SiCl$_2$(GC-Prozente) | 0.4 | 7.3 | 0.7 | 4.4 | 0.3 | 4.3 | 3.7 | 0.9 |
| Summe nicht identifizierter | | | | | | | | |
| Anteile (GC-Prozente) | 1.3 | 0.7 | 1.3 | 0.5 | 1.4 | 0.6 | 1.2 | 2.2 |
| b) nach Abtrennung vom Katalysator | | | | | | | | |
| Cl-CH$_2$-CH$_2$-(CH$_3$-)SiCl$_2$ (GC-Prozente) | 96.4 | 90.7 | 96.0 | 93.5 | 96.1 | 94.0 | 93.1 | 92.9 |
| CH$_3$-SiCl$_3$ (GC-Prozente) | 2.1 | 1.3 | 2.0 | 1.7 | 2.2 | 1.1 | 2.0 | 4.1 |
| CH$_2$=CH-(CH$_3$-)SiCl$_2$ (GC-Prozente) | 0.5 | 7.1 | 0.7 | 4.3 | 0.4 | 4.2 | 3.5 | 0.9 |
| Summe nicht identifizierter | | | | | | | | |
| Anteile (GC-Prozente) | 1.0 | 0.9 | 1.3 | 0.5 | 1.3 | 0.7 | 1.4 | 2.1 |
| Ausbeute an 2-Chloräthylmethyl-dichlorsilan | 95.1 | 90.1 | 94.9 | 92.9 | 95.1 | 93.3 | 92.8 | 92.9 |

**Patentansprüche**

Verfahren zur Herstellung von 2-Chlorethyldichlorsilanen durch Umsetzung von Vinyldichlorsilanen mit Chlorwasserstoff in Gegenwart von wasserfreien Metallchloriden, dadurch gekennzeichnet, daß als wasserfreie Metallchloride entweder FeCl$_3$ oder TaCl$_5$ eingesetzt wird, wobei FeCl$_3$ in Mengen zwischen 1 und 15 Gew.-%, bezogen auf Vinyldichlorsilan, eingesetzt wird und dabei die Umsetzung im Temperaturbereich zwischen 30 und 60°C, und beim Einsatz von TaCl$_5$ die Umsetzung im Temperaturbereich zwischen 40 und 90°C durchgeführt wird.

2. Verfahren gemäß Anspruch 1, dadurch gekennzeichnet, daß beim Einsatz von FeCl$_3$ in Mengen zwischen 1 und 10 Gew.-%, bezogen auf eingesetztes Vinyldichlorsilan, die Umsetzung bei Temperaturen zwischen 40 und 50°C durchgeführt wird.

3. Verfahren gemäß Anspruch 1, dadurch gekennzeichnet, daß das TaCl$_5$ in Mengen zwischen 1 und 10 Gew.-%, bezogen auf das eingesetzte Vinyldichlorsilan, eingesetzt wird.

4. Verfahren gemäß Anspruch 1 und 3, dadurch gekennzeichnet, daß beim Einsatz von TaCl$_5$ in Mengen zwischen 1 und 5 Gew.-% die Umsetzung bei Temperaturen zwischen 65 und 80°C durchgeführt wird.

5. Verfahren gemäß einem der Ansprüche 1 bis 4, dadurch gekennzeichnet, daß anschließend an die Umsetzung die Abtrennung des erhaltenen 2-Chlorethyldichlorsilans durch Destillation in Gegenwart des Eisen- bzw. Tantalchlorids und in Abwesenheit von desaktivierenden Verbindungen durchgeführt wird.

**Claims**

1. Process for producing 2-chloroethyl-dichlorosilanes by reacting vinyl dichlorosilanes with hydrogen chloride in the presence of anhydrous metal chlorides, characterised in that either FeCl$_3$ or TaCl$_5$ are used as anhydrous metal chlorides, with FeCl$_3$ being used in quantities of between 1 and 15 % by weight in relation to vinyl dichlorosilane and the reaction moreover being carried out in the temperature range of 30 to 60°C, and, when TaCl$_5$ is used, the reaction being carried out in the temperature range of 40 to 90°C.

2. Process according to claim 1, characterised in that the reaction is carried out at temperatures of between 40 and 50°C when employing FeCl$_3$ in a quantity of between 1 and 10 % by weight in relation to the vinyl dichlorosilane used.

3. Process according to claim 1, characterised in that the TaCl$_5$ is employed in quantities of between 1 and 10 % by weight in relation to the vinyl dichlorosilane employed.

4. Process according to claims 1 and 3, characterised in that the reaction is carried out at temperatures of between 65 and 80°C when employing TaCl$_5$ in quantities of between 1 and 5 % by weight.

5. Process according to one of claims 1 to 4, characterised in that after the reaction has taken place, the separation of the 2-chloroethyl-dichlorsilane obtained is carried out by distillation in the presence of the iron or tantalum chloride and in the absence of deactivating compounds.

5

**Revendications**

1. Procédé de préparation de 2-chloroéthyldichlorosilanes par réaction de vinyldichlorosilanes avec de l'acide chlorhydrique en présence de chlorures métalliques anhydres, caractérisé en ce qu'on met en oeuvre comme chlorures métalliques anhydres du FeCl$_3$ ou du TaCl$_5$, moyennant quoi le FeCl$_3$ est utilisé en des quantités comprises entre 1 et 15 % en poids par rapport au vinyldichlorosilane et la réaction est conduite dans ce cas dans la gamme de températures de 30 à 60°C et, dans le cas de l'emploi de TaCl$_5$, la réaction est conduite dans la gamme de températures de 40 à 90°C.

2. Procédé selon la revendication 1, caractérisé en ce que, lors de l'emploi de FeCl$_3$ en des quantités comprises entre 1 et 10 % en poids par rapport au vinyldichlorosilane mis en oeuvre, la réaction est conduite à des températures entre 40 et 50°C.

3. Procédé selon la revendication 1, caractérisé en en ce que le TaCl$_5$ est mis en oeuvre en des quantités de 1 à 10 % en poids par rapport au vinyldichlorosilane mis en oeuvre.

4. Procédé selon les revendications 1 et 3, caractérisé en ce que, lors de l'emploi de TaCl$_5$ en des quantités de 1 à 5 % en poids, la réaction est conduite à des températures entre 65 et 80°C.

5. Procédé selon l'une des revendications 1 à 4, caractérisé en ce qu'aussitôt après la réaction, la séparation du 2-chloroéthyldichlorosilane obtenu s'effectue par distillation en présence du chlorure de fer ou de tantale et en l'absence de composés désactivants.